# EUROPÄISCHE PATENTSCHRIFT

(11) **EP 0 938 457 B1**
(45) Veröffentlichungstag und Bekanntmachung des Hinweises auf die Patenterteilung: **19.09.2001**
(21) Anmeldenummer: 97948842.6
(22) Anmeldetag: 30.10.1997
(51) Int. Cl.: C03C 17/00, C04B 41/50, C23C 18/12, H01J 29/88, C09D 1/00

(54) **VERFAHREN ZUR HERSTELLUNG VON SUBSTRATEN MIT HOCHTEMPERATUR- UND UV-STABILEN, TRANSPARENTEN, FARBIGEN BESCHICHTUNGEN, BESCHICHTUNGSZUSAMMENSETZUNG UND VERWENDUNG**
METHOD FOR MANUFACTURING SUBSTRATES WITH TRANSPARENT AND COLOUR COATINGS STABLE AT HIGH TEMPERATURES AND IN THE PRESENCE OF ULTRAVIOLET, COATING COMPOSITION AND USE
PROCEDE DE FABRICATION DE SUBSTRATS AVEC REVETEMENTS DE COULEUR TRANSPARENTS ET STABLES A HAUTE TEMPERATURE ET AUX RAYONS, COMPOSITION DE REVETEMENT ET UTILISATION

(30) Priorität: 31.10.1996 DE 19645043
(43) Veröffentlichungstag der Anmeldung: 01.09.1999
(73) Patentinhaber: Institut Für Neue Materialien gem. GmbH, 66123 Saarbrücken (DE)
(72) Erfinder: ENDRES, Klaus, D-66424 Homburg (DE); LINDENSTRUTH, Marion, D-66125 Saarbrücken (DE); MENNIG, Martin, D-66287 Quierschied (DE); PIETSCH, Matthias, D-35390 Giessen (DE); SCHMIDT, Helmut, D-66130 Saarbrücken (DE)
(74) Vertreter: Barz, Peter, Dr.
(86) Internationale Anmeldenummer: EP9706006
(87) Internationale Veröffentlichungsnummer: WO9818736

(56) Entgegenhaltungen:
- EP-A- 0 452 922
- EP-A- 0 598 472
- EP-A- 0 739 996
- DE-A- 4 338 360

## Beschreibung

Die vorliegende Erfindung betrifft ein Verfahren zur Herstellung von Substraten mit Hochtemperatur- und UV-beständigen, transparenten, farbigen Beschichtungen, insbesondere von (Glas) substraten, die bei ihrer Herstellung und/oder ihrem Gebrauch hohen Temperaturen (z.B. bis zu 900°C) ausgesetzt werden. Beispiele für derartige Substrate sind insbesondere Lampenkolben für Halogen- und Gasentladungslampen sowie entsprechende Vorsatzfilter.

Im Volumen gefärbte Gläser werden durch Einbringen farbiger Ionen der 3d-Elemente, durch Beimengung von Chalkogeniden oder Chalkogenen (Anlauffarbgläser) oder durch Zusatz von Edelmetallen (kolloidgefärbte Gläser) hergestellt (siehe z.B. W. Vogel, Glaschemie, 3. Auflage, Springer-Verlag, 1992). Aufgrund der ungenügenden chemischen und thermischen Beständigkeit bzw. der hohen Kosten der Edelmetallionen, die in Konzentrationen von 0,003 bis 0,1 Masse-% der Schmelze zugesetzt werden, sind derartige Gläser für die Herstellung von gefärbten Massenprodukten wie z.B. (Halogen-)Lampenkolben, die aus Kieselglas oder Borosilikatglas gefertigt werden, nicht geeignet.

Farbige (kolloidgefärbte) Beschichtungen auf Glassubstraten können durch Einbringen von färbenden Metallionen, Metall- oder Metallegierungskolloiden in eine SiO_{**2**}- bzw. TiO_{**2**}-Matrix nach dem Sol-Gel-Verfahren erhalten werden (siehe z.B. DE-A-43 38 360 und S. Sakka et al., Proc. SPIE-Int. Soc. Opt. Eng. (1994), 2288 (Sol-Gel Optics III), 108-119). Die Nachteile dieser beschriebenen Verfahren liegen, insbesondere bei den TiO_{**2**}-Beschichtungen, in der Verwendung teurer und gesundheitlich nicht unbedenklicher Alkoxide als Matrixbildner; außerdem entstehen beim Trocknen der Beschichtung aufgrund der Verwendung von Eeschichtungssolen auf Alkohol-Basis große Mengen an Lösungsnitteldämpfen.

Andere Möglichkeiten zur Färbung von Borosilikat- bzw. Kieselglas-Substraten sind Beschichtungen mit organischen Farbstoffen, Pigmenten oder Interferenzschichten.

Zum Färben von Glassubstraten und speziell von Lampenkolben mit organischen Farbstoffen werden üblicherweise 0,1 bis 15 Gew.-% der Farbstoffe z.B. in einer Alkydharz-, Polyesterharz- oder Polyurethan-Schicht auf die Lampenkolben aufgebracht. Als organische Farbstoffe werden z.B. Phenoxine, Phenothiazine, Triphenylmethan und Anthrachinone verwendet, die zum Teil als Alkoxysilylderivate in eine Tetraethoxysilan(TEOS)/Methyltriethoxysilan(MTEOS)-Matrix eingelagert sind und über Tauchbeschichtung aufgebracht werden (siehe z.B. JP-A-57/182437). In JP-A-04/107260 wird ein Verfahren beschrieben, mit dem gelbe Farben durch eine Pigment(Chinophthalan)-SiO₂-Beschichtung, die über Chemical Vapor Deposition (CVD) aufgebracht wird, erhalten werden. JP-A-58/156553 offenbart ein Verfahren, bei dem die Beschichtung der Innenseite von Borosilikatglas-Lampen mit γ-Aminopropyltriethoxysilan und einem Polyimid-Harz zu gelben oder amberfarbenen Nebellampen führt. Ebenfalls gelbe Färbungen, für Nebellampen, werden gemäß JP-A-06/001635 durch Einbau eines organisches Pigments in eine TEOS-Schicht erreicht, wobei jedoch keine Aussagen zur Temperaturstabilität gemacht werden. Pigmente in einer organischen Acrylat-Urethan-Matrix führen nach Ausbrennen der organischen Bestandteile bei 780°C zu braungelben Lüsterfarben, die zur Herstellung gelber Nebellampen nicht Geeignet sind (siehe DE-A-38 19 413). Der Hauptnachteil dieser mit organischen Farbstoffen oder Pigmenten erzielten Färbungen liegt zum einen in den aufwendigen Beschichtungsverfahren (Beschichtung der Innenseite, CVD), zum anderen in der teilweise ungenügenden thermischen und UV-Stabilität der verwendeten organischen Farbstoffe. Ein weiterer Nachteil liegt auch hier zum Teil in der Verwendung der oben erwähnten teuren Alkoxide, die üblicherweise als alkoholische Lösungen eingesetzt werden.

Interferenzfärbungen werden durch Mehrfachbeschichtungen mit hochbrechenden TiO_{**2**}-, Ta_{**2**}O_{**5**}- und ZrO_{**2**}- und niedrigbrechenden SiO_{**2**}- bzw. SnO_{**2**}-Schichten, die alternierend übereinander vorgesehen werden, erhalten (siehe z.B. JP-A-07/078601 und JP-A-02/250201). Der Schichtauftrag kann über Sputtern, Tauchen, CVD oder über Heißsprühtechniken erfolgen. Über Interferenzschichten werden bislang vorwiegend gelbe Lampen hergestellt. Nachteil dieses Verfahrens ist, daß zum Erreichen der gewünschten Färbungen z.B. für gelbe Schichten Mehrfachbeschichtungen mit bis zu acht Beschichtungsvorgängen erforderlich sind. Darüber hinaus finden auch hier im Falle der Naßbeschichtungstechniken Alkoxide Verwendung.

Im Gegensatz zu den oben beschriebenen Verfahren wurde erfindungsgemäß ein Verfahren zur Herstellung von Hochtemperatur- und UV-stabilen, transparenten, farbigen Beschichtungen auf Substraten, insbesondere Glassubstraten (z.B. Lampenkolben und Gasentladungsröhren), gefunden, das den Vorteil bietet, daß zur Herstellung der farbigen Schichten die Matrix nicht durch Hydrolyse einer Metallverbindung mit hydrolytisch abspaltbaren Alkoxygruppen in einem organischen (in der Regel alkoholischen) Lösungsmittel mit anschließender Polykondensation gebildet wird, sondern daß die Matrix durch thermische Behandlung von wäßrigen Lösungen oder Solen von matrixbildenden Elementverbindungen entsteht. Darüber hinaus ist es im Gegensatz zu den oben genannten Beschichtungsverfahren hierbei möglich, in nur einem einzigen Beschichtungsschritt unterschiedliche Färbungen zu erzeugen.

Demgemäß wird erfindungsgemäß ein Verfahren zur Herstellung von Substraten, insbesondere Glassubstraten, mit Hochtemperatur- und UV-beständigen, transparenten, farbigen Beschichtungen bereitgestellt, daß dadurch gekennzeichnet ist, daß man ein Substrat mit einer Beschichtungszusammensetzung versieht, die
(A) mindestens ein Element, das ein glasartiges, kristallines oder teilkristallines Oxid bilden kann, in Form einer Verbindung, die bei thermischer Behandlung dieses Oxid liefern kann und in einem zumindest vorwiegend wäßrigen Medium als Lösung oder Sol vorliegt, als matrixbildende Komponente; und
(B) mindestens ein Mitglied aus der Gruppe der Metall-, Metallverbindurgs- und Metallegierungskolloide und der Metallverbindungen, die unter reduzierenden Bedingungen Metallkolloide bilden können, als farbgebende Komponente;
enthält, und den resultierenden Überzug thermisch unter Bildung des beschichteten Substrats härtet (verdichtet).

Beim erfindungsgemäßen Verfahren erfolgt die Farbbildung durch Metall(verbindungs)kolloide bzw. Metallegierungskolloide in einer geeigneten Matrix. Die Kolloidbildung kann in Lösung oder bei der Verdichtung der Schichten mit Hilfe der im Falle von zu reduzierenden Metallverbindungen für die Kolloidbildung erforderlichen Reduktionsmitteln (die gegebenenfalls gleichzeitig als Komplexliganden für die eingesetzten Metallverbindungen fungieren) bzw. durch geeignete Reaktionsführung erfolgen. Durch geeignete Wahl der gegebenenfalls eingesetzten Komplexbildner sowle durch die Reaktionsführung können die Keimbildungs- und Wachstumsprozesse der Kolloide in Lösung bzw. während der thermischen Härtung (Verdichtung) der Beschichtungen gesteuert werden.

Als Matrix kommen glasartige (z.B. Borosilikat, Alumosilikat, SiO_{**2**}, Bleisilikat), teilkristalline oder kristalline (z.B. TiO_{**2**}, ZrO_{**2**}, ZnO) Materialien (Oxide) in Frage. Diese Matrix kann durch Verwendung einzelner partikulärer Solsysteme wie etwa SiO_{**2**}-, TiO_{**2**}-, ZrO_{**2**}- oder Al_{**2**}O_{**3**}-Sole, aber auch durch Einsatz von Mischungen derartiger Solsysteme erzeugt werden. Als matrixbildende Elemente kommen sowohl solche in Frage, deren Oxide typische Glasbildner sind, wie z.B. Si, B, Al, Pb, Ge, Bi, Sb, As und P, als auch solche, die bevorzugt teilkristalline oder kristalline Oxide bilden, wie z.B. Ti, Zr, Hf, V, Nb, Ta, W, Mo, Al, Zn, Sn und Ce. Als kolloidale Metalloxide werden Oxide von Elementen der 4. bis 6. Nebengruppe, insbesondere Ti, Zr, Nb und Ta, sowie Oxide von Al, B, Sn, Zn und Ce bevorzugt. Darüber hinaus kann eine Modifizierung der Matrix durch Zusatz von Salzen wie z.B. solchen von Pb, Ce, Zn und Alkali- und Erdalkalimetallen (insbesondere Na, K, Mg und Ca), z.B. der Acetate, Nitrate oder Hydroxide dieser Metalle, erfolgen. So ist es zum Beispiel möglich, die Brechzahl einer silikatischen Matrix durch Einbau von PbO so zu variieren, daß sie an die Brechzahl des Substrates angepaßt werden kann. Darüber hinaus führt die Variation des Brechnungsindex der Matrix zu einer Verschiebung der Absorptionsbanden der Metallkolloide und damit zu einer Verschiebung des Farbortes. Im Falle hochbrechender Matrices (z.B. TiO_{**2**}, ZrO_{**2**}) kann die Brechzahl und somit der Farbort insbesondere durch gezielten Einbau von Alkalimetallionen variiert werden.

Beispiele für die Komponenten (A) der Beschichtungszusammensetzung sind reaktive Kieselsole, Wasserglaslösungen, partikuläre Systeme der Oxide von Ti, Zr, Nb, Ta, Al, Ce und Sn sowie (wäßrige) Lösungen von Metallsalzen wie beispielsweise Salzen von Pb, Zn und Bi (wie auch der Alkali- und Erdalkalimetalle) . Geeignete Salze sind z.B. die Formiate, Acetate, Tartrate, Citrate, Carbonate, Halogenide, Nitrate und Hydroxide. As, Sb, P und B können auch in Form von wasserlöslichen Arsenaten, Antimonaten, Phosphaten oder Boraten eingesetzt werden.

Als farbgebende Komponente (B) der erfindungsgemäß eingesetzten Beschichtungszusammensetzung eignen sich insbesondere Kolloide von Au, Ag, Cu, Pt, Ir, Rh, Pd, Ru und Mischungen derselben sowie entsprechende Metallverbindungs- und Metallegierungskolloide. Au, Ag und Cu sind als Metalle besonders bevorzugt. Diese Kolloide haben in der Regel einen Partikeldurchmesser vcn 1 bis 50 nm, insbesondere 5 bis 20 nm. Werden Metallverbindungen, die unter reduzierenden Bedingungen Metallkolloide bilden, verwendet, werden diese in der Regel in komplexierter Form eingesetzt, wobei beispielsweise die unten beschriebenen Komplexbildner verwendet werden können. Die Menge an eingesetzter farbgebender Komponente ist abhängig von der gewünschten Farbintensität der Beschichtungen. Üblicherweise liegen die Metalle der Komponente (B) in einer Konzentration von 0,01 bis 50 Atom-%, bezogen auf die Summe der Elementatome der Komponente (A) und der Metallatome der Komponente (B), vor.

Geeignete Komplexbildner sind beispielsweise Halogenidionen (insbesondere Chlcridionen) bzw. die entsprechenden Halogenwasserstoffsäuren, Monoamine, Di-, Tri-, Tetra- und höhere Polyamine (beispielsweise 3-Aminopropyltriethoxysilan (APTS), N-(2-Aminoethyl)-3-aminopropyltrimethoxysilan (DIAMO), Triethylentetramin, Diethylentriamin und Ethylendiamin) , Thioverbindungen, Thiocyanoverbindungen, Zucker (z.B. Pentosen und Hexosen wie beispielsweise Glucose), β-Dicarbonylverbindungen wie beispielsweise Diketone (z.B. Acetylaceton) und Ketoester (z.B. Allylacetoacetat und Ethylacetoacetat), Etheralkohole, Polyole (auch polynere wie z.B. Polyalkylenglykole), Kronenether und Phosphorverbindungen. Diese Komplexbildner können zumindest teilweise auch als Reduktionsmittel für die Metallverbindung eingesetzt werden. Bei Verwendung eines Komplexbildners beträgt das Verhältnis von Metallatomen zu vorhandenen komplexierenden Gruppierungen vorzugsweise 1:0,1 bis 1:500, insbesondere 1:1 bis 1:200.

Weitere fakultative Komponenten der erfindungsgemäß eingesetzten Beschichtungszusammensetzung sind insbesondere Säuren bzw. Basen (z.B. Ameisensäuren, Essigsäure, Salzsäure und Salpetersäure, Ammoniak) , die gegebenenfalls insbesondere zur Stabilisierung der für die matrixbildende Komponente eingesetzten Ausgangsmaterialien verwendet werden, und organische oder anorganische Bindemittel wie z.B. Alkylhydroxycellulosen, Polyvinylalkohol, Polyvinylpyrrolidon, Polyethylenglykole und Wasserglaslösungen. Als weitere fakultative Zusätze sind leicht flüchtige organische Lösungsmittel wie z.B. Ether oder Alkohole in geringen Mengen (beispielsweise bis zu 10 Vol.-%, bezogen auf Wasser plus organisches Lösungsmittel) zu nennen. Ganz allgemein bedeutet der oben verwendete Ausdruck "vorwiegend wäßriges Medium", daß das Medium mindestens 70, vorzugsweise mindestens 80 und insbesondere mindestens 90 Vol.-% Wasser umfaßt. Besonders bevorzugt wird ein Medium, das ausschließlich oder nahezu ausschließlich aus Wasser besteht.

Wie bereits oben erwähnt, sind die Substrate für das erfindungsgemäße Verfahren vorzugsweise Glassubstrate. Es können aber auch Substrate aus anderen Materialien, z.B. Metall und Keramiken, erfindungsgemäß beschichtet werden. Insbesondere im Falle von von Glas verschiedenen Substratmaterialien kann eine Vorbehandlung des Materials zwecks Verbesserung der Haftung der Beschichtung darauf von Vorteil sein.

Die Beschichtungslösung bzw. eine Mischung zweier Beschichtungslösungen mit unterschiedlichen farbgebenden Komponenten (und gegebenenfalls auch unterschiedlichen matrixbildenden Komponenten) kann, nachdem gegebenenfalls die gewünschte Viskosität durch Zugabe oder Entfernen von Lösungsmittel (Wasser) eingestellt wurde, nach den üblichen (Naß-)Beschichtungsverfahren (z.B. Sprühen, Tauchen, Aufstreichen) auf das Substrat, z.B. einen Lampenkolben, aufgebracht werden. Zur Anpassung der Benetzungseigenschaften des Beschichtungsmaterials an das Substrat können gegebenenfalls die oben erwähnten organischen oder anorganischen Bindemittel und/oder leicht flüchtigen organischen Zusätze in geringen Mengen zugefügt werden. Materialien für Glassubstrate sind z.B. Borosilikatglas oder Kieselglas. Diese Substrate können die unterschiedlichsten Geometrien aufweisen, wenngleich sich das erfindungsgemäße Verfahren besonders für die Beschichtung von (Halogen)lampenkolben und Gasentladungslampen eignet.

Nach erfolgter Beschichtung werden die Substrate im allgemeinen bei Raumtemperatur oder erhöhter Temperatur (beispielsweise bei bis zu 100°C) getrocknet. Daran schließt sich eine thermische Härtung (Verdichtung) der aufgebrachten Beschichtungen bei Temperaturen an, die üblicherweise von 450°C bis kurz unter den Erweichungspunkt des Substratmaterials (bei Glas in der Regel bis zu 900°C) reichen. Die Verdichtung kann z.B. in einem Ofen (Tunnelofen), mit der Brennerflamme, durch IR-Strahlung oder ähnliche geeignete Wärmezuführungstechniken erfolgen.

Die erfindungsgemäß verwendete Beschichtungszusammensetzung kann thermisch zu rißfreien, transparenten, homogenen Beschichtungen verdichtet werden. Die eingebrachten farbgebenden Komponenten können im Falle von zu Metallkolloiden reduzierbaren Verbindungen als Komponente (B) z.B. durch der Beschichtungszusammensetzung einverleibte Reduktionsmittel (aber z.B. auch durch eine reduzierende Gasatmosphäre während der thermischen Behandlung) reduziert werden, behalten ihre Funktion (Lichtabsorption) bei und ergeben intensiv gefärbte Schichten. Die Verdichtung bei hoher Temperatur (z.B. 450 bis 900°C) erlaubt die Herstellung von Beschichtungen mit hohem Glanz und hoher thermischer, mechanischer, chemischer und UV-Stabilität auf Substraten. Außerdem sind die Färbungen derselben unabhängig von der Zusammensetzung des Substrats (z.B. Borosilikat, Kieselglas, usw.).

Die folgenden Beispiele erläutern die Erfindung.

### BEISPIEL 1

### Herstellung einer blauen Lampenbeschichtung (I)

In 20 g einer kolloidalen TiO₂-Lösung (TA-10, Nissan Chemical Industries, Ltd.) mit einem Gehalt von 10 Gew.-% TiO₂ in HNO₃ - saurer, wäßriger Lösung werden 1,024 g Gold(III)chlorid (AuCl_{**3**} x 3 H_{**2**}O) gelöst. Nach 15-minütigem Rühren ist das Sol beschichtungsfertig. Im Tauchbeschichtungsverfahren werden Substrate (Lampenkolben) mit einer Ziehgeschwindigkeit von 2 mm/s aus dem Beschichtungssol gezogen. Die Verdichtung der Schichten erfolgt bei 900°C für 60 Minuten. Die Heizrate beträgt 60-100 K/h. Es resultieren intensiv blau gefärbte Schichten.

### Herstellung einer blauen Lampenbeschichtung (II)

In 20 g eine kolloidalen ZrO_{**2**}-Lösung (ZrO_{**2**}-Ac, The PQ-Corporation, Nyacol Products Inc.) mit einem Gehalt von 20 Gew.-% ZrO_{**2**} in essigsaurer, wäßriger Lösung werden 1,278 g Tetrachlorgoldsäure (HAuCl_{**4**} x 3 H_{**2**}O) gelöst. Nach 15-minütigem Rühren ist das Sol beschichtungsfertig. Im Tauchbeschichtungsverfahren werden die Substrate mit einer Ziehgeschwindigkeit von 2 mm/s aus dem Beschichtungssol gezogen. Die Verdichtung der Schichten erfolgt bei 900°C für 60 Minuten. Die Heizrate beträgt 60-100 K/h. Es resultieren intensiv blau gefärbte Schichten.

### BEISPIEL 2

### Herstellung einer rotvioletten Lampenbeschichtung

In 20 g einer kolloidalen TiO_{**2**}-Lösung (TA-10, Nissan Chemical Industries, Ltd.) mit einem Gehalt von 10 Gew.-% TiO_{**2**} in HNO_{**3**}-saurer, wäßriger Lösung werden 0,442 g Silbernitrat (AgNO_{**3**}) gelöst. Nach 15-minütigem Rühren ist das Sol beschichtungsfertig. Im Tauchbeschichtungsverfahren werden die Substrate mit einer Ziehgeschwindigkeit von 2 mm/s aus dem Beschichtungssol gezogen. Die Verdichtung der Schichten erfolgt bei 600°C für 60 Minuten unter Formiergas (92 Vol.-% N_{**2**}, 8 Vol.-% H_{**2**}). Die Heizrate beträgt 60-100 K/h. Es resultieren intensiv rotviolett gefärbte Schichten.

### BEISPIEL 3

### Herstellung einer gelben Lampenbeschichtung

In 20 g einer kolloidalen TiO_{**2**}-Lösung (TA-10, Nissan Chemical Industries, Ltd.) mit einem Gehalt von 10 Gew.-% TiO_{**2**} in HNO_{**3**} - saurer, wäßriger Lösung werden 0,442 g Silbernitrat gelöst. Nach 15-minütigem Rühren ist das Sol beschichtungsfertig. Im Tauchbeschichtungsverfahren werden die Substrate mit einer Ziehgeschwindigkeit von 2 mm/s aus dem Beschichtungssol gezogen. Die Verdichtung der Schichten erfolgt bei 600°C für 60 Minuten unter Luft. Die Heizrate beträgt 60-100 K/h. Es resultieren gelb gefärbte Schichten.

### BEISPIEL 4

### Herstellung einer grünen Lampenbeschichtung

In 20 g einer kolloidalen TiO_{**2**}-Lösung (TA-10, Nissan Chemical Industries, Ltd.) nit einem Gehalt von 10 Gew.-% TiO_{**2**} in HNO_{**3**}-saurer, wäßriger Lösung werden nacheinander 0,628 g Kupfernitrat (Cu(NO_{**3**})_{**2**} x 3 H_{**2**}O) und 0,468 g Glucose gelöst. Nach 15-minütigem Rühren bei 50°C und nachfolgenden Abkühlen auf Raumtemperatur ist das Sol beschichtungsfertig. Im Tauchbeschichtungsverfahren werden die Substrate mit einer Ziehgeschwindigkeit von 2 mm/s aus dem Beschichtungssol gezogen. Die Verdichtung der Schichten erfolgt bei 600°C für 60 Minuten unter Formiergas. Die Heizrate beträgt 60-100 K/h. Es resultieren intensiv grün gefärbte Schichten.

### BEISPIEL 5

### Herstellung einer roten Lampenbeschichtung

In 12 g einer kollcidalen SiO_{**2**}-Lösung (VP-AC 4038, Bayer) mit einem Gehalt von 30 Gew.-% SiO_{**2**} in ammoniakalischer, wäßriger Lösung werden nacheinander 2,4 g N-(2-Aminoethyl-3-aminopropyl)-trimethoxysilan und 2 g Blei (II)acetat (Pb(CH_{**3**}COO)_{**2**}) gelöst. Zu dieser Lösung fügt man eine Lösung von 1,4 g Gold-(III)chlorid in 3 ml Wasser, welches zusätzlich mit 1 ml Diethylentriamin versetzt wurde. Nach 15 min Rühren ist das Sol beschichtungsfertig. Im Tauchbeschichtungsverfahren werden die Substrate mit einer Ziehgeschwindigkeit von 1 mm/s aus dem Beschichtungssol gezogen. Die Verdichtung der Schichten wird bei 600°C für 60 min durchgeführt. DIe Heizrate beträgt 60 - 100 K/h. Es resultieren intensiv rot gefärbte Schichten.

## Patentansprüche

1. Verfahren zur Herstellung von Substraten mit Hochtemperatur- und UV-beständigen, transparenten, farbigen Beschichtungen, **dadurch gekennzeichnet, daß** man ein Substrat mit einer Beschichtungszusammensetzung versieht, die
(A) mindestens ein Element, das ein glasartiges, kristallines oder teilkristallines Oxid bilden kann, in Form einer Verbindung, die bei thermischer Behandlung dieses Oxid liefern kann und in einem zumindest vorwiegend wäßrigen Medium als Lösung oder Sol vorliegt, als matrixbildende Komponente;
(B) mindestens ein Mitglied aus der Gruppe der Metall-, Metallverbindungs- und Metallegierungskolloide und der Metallverbindungen, die unter reduzierenden Bedingungen Metallkolloide bilden können, als farbgebende Komponente
enthält, und den resultierenden Überzug thermisch unter Bildung des beschichteten Substrats härtet.

2. Verfahren nach Anspruch 1, **dadurch gekennzeichnet, daß** das Element für die Komponente (A) aus Si, B, Al, Pb, Ge, Bi, Sb, As, P, Ti, Zr, Hf, V, Mo, W, Nb, Ta, Al, Zn, Sn, Ce und beliebigen Mischungen dieser Elemente ausgewählt ist.

3. Verfahren nach Anspruch 1 oder 2, **dadurch gekennzeichnet, daß** das Element für die Komponente (A) mindestens eines von Si, Ti und Zr umfaßt.

4. Verfahren nach irgendeinem der Ansprüche 1 bis 3, **dadurch gekennzeichnet, daß** die Komponente (A) zusätzlich mindestens eine Verbindung eines matrixmodifizierenden Elements enthält.

5. Verfahren nach Anspruch 4, **dadurch gekennzeichnet, daß** das matrixmodifizierende Element aus Alkali- und Erdalkalimetallen ausgewählt ist.

6. Verfahren nach irgendeinem der Ansprüche 1 bis 5, **dadurch gekennzeichnet, daß** das zumindest vorwiegend wäßrige Medium von Komponente (A) mindestens 70 und insbesondere mindestens 90 Vol.-% Wasser umfaßt.

7. Verfahren nach irgendeinem der Ansprüche 1 bis 5, **dadurch gekennzeichnet, daß** das Metall für die Komponente (B) aus Au, Ag, Cu, Pd, Pt, Ir, Rh, Ru und beliebigen Mischungen davon ausgewählt ist.

8. Verfahren nach irgendeinem der Ansprüche 1 bis 7, **dadurch gekennzeichnet, daß** die Metalle der Komponente (B) in einer Konzentration von 0,01 bis 50 Atom-%, bezogen auf die Summe der Elementatome der Komponente (A) und der Metallatome der Komponente (B), vorliegen.

9. Verfahren nach irgendeinem der Ansprüche 1 bis 8, **dadurch gekennzeichnet, daß** die Metallverbindungen für die Komponente (B) zumindest teilweise in komplexierter Form vorliegen.

10. Verfahren nach Anspruch 9, **dadurch gekennzeichnet, daß** das Verhältnis Metallatome zu vorhandenen komplexierenden Gruppierungen 1:0,1 bis 1:500 beträgt.

11. Verfahren nach irgendeinem der Ansprüche 1 bis 10, **dadurch gekennzeichnet, daß** die Beschichtungszusammensetzung weiter mindestens ein Mitglied aus der Gruppe der Säuren bzw. Basen, Reduktionsmittel für die Metallverbindung von Komponente (B), anorganischen und organischen Bindemittel urd organischen Lösungsmittel enthält.

12. Verfahren nach irgendeinem der Ansprüche 1 bis 11, **dadurch gekennzeichnet, daß** es sich bei dem Substrat um ein Glassubstrat handelt.

13. Verfahren nach Anspruch 12, **dadurch gekennzeichnet, daß** das Glassubstrat aus Lampenkolben, Halogenlampen, Gasentladungsröhren und Vorsatzfiltern ausgewählt ist.

14. Beschichtungszusammensetzung zur Herstellung von Hochtemperatur- und UV-beständigen, transparenten, farbigen Beschichtungen auf Substraten, **dadurch gekennzeichnet, daß** sie umfaßt:
(A) mindestens ein Element, das ein glasartiges, kristallines oder teilkristallines Oxid bilden kann, in Form einer Verbindung, die bei thermischer Behandlung dieses Oxid liefern kann und in einem zumindest vorwiegend wäßrigen Medium als Lösung oder Sol vorliegt, als matrixbildende Komponente;
(B) mindestens ein Mitglied aus der Gruppe der Metall-, Metallverbindungs- und Metallegierungskolloide und der Metallverbindungen, die unter reduzierenden Bedingungen Metallkolloide bilden können, als farbgebende Komponente.

15. Verwendung einer wie in den Ansprüchen 1 bis 11 definierten Beschichtungszusammensetzung zur Herstellung Hochtemperatur- und UV-beständiger, transparenter, farbiger Beschichtungen auf Substraten, vorzugsweise Glassubstraten, die während ihres Gebrauchs hohen Temperaturen ausgesetzt werden, insbesondere auf Lampenkolben und Gasentladungsröhren.

## Claims

1. A method of manufacturing substrates with transparent, colored coatings stable to high temperature and UV, which comprises coating a substrate with a coating composition comprising
(A) at least one element which is able to form a vitreous, crystalline or partially crystalline oxide, in the form of a compound which on heat treatment is able to yield said oxide and is present as a sol or solution in an at least predominantly aqueous medium, as the matrix-forming component; and
(B) at least one member from the group of metal colloids, metal compound colloids and metal alloy colloids and metal compounds which are able under reducing conditions to form metal colloids, as the coloring component;
and heat-curing the resulting coating to form the coated substrate.

2. The method as claimed in claim 1, wherein the element for component (A) is selected from Si, B, Al, Pb, Ge, Bi, Sb, As, P, Ti, Zr, Hf, V, Mo, W, Nb, Ta, Al, Zn, Sn, Ce and any desired mixtures of these elements.

3. The method as claimed in claim 1 or 2, wherein the element for component (A) comprises at least one of Si, Ti and Zr.

4. The method as claimed in any one of claims 1 to 3, wherein component (A) additionally comprises at least one compound of a matrix-modifying element.

5. The method as claimed in claim 4, wherein said matrix-modifying element is selected from alkali metals and alkaline earth metals.

6. The method as claimed in any one of claims 1 to 5, wherein said at least predominantly aqueous medium of component (A) comprises at least 70 and, in particular, at least 90% by volume of water.

7. The method as claimed in any one of claims 1 to 5, wherein the metal for component (B) is selected from Au, Ag, Cu, Pd, Pt, Ir, Rh, Ru and any desired mixtures thereof.

8. The method as claimed in any one of claims 1 to 7, wherein the metals of component (B) are present in a concentration of from 0.01 to 50 atom%, based on the sum of the element atoms of component (A) and of the metal atoms of component (B).

9. The method as claimed in any one of claims 1 to 8, wherein the metal compounds for component (B) are present, at least in part, in complexed form.

10. The method as claimed in claim 9, wherein the ratio of metal atoms to complexing groups that are present is from 1:0.1 to 1:500.

11. The method as claimed in any one of claims 1 to 10, wherein the coating composition additionally comprises at least one member from the group of acids and bases, reducing agents for the metal compound of component (B), inorganic and organic binders, and organic solvents.

12. The method as claimed in any one of claims 1 to 11, wherein said substrate is a glass substrate.

13. The method as claimed in claim 12, wherein said glass substrate is selected from lamp bulbs, halogen lamps, gas discharge tubes, and filters.

14. A coating composition for manufacturing transparent, colored coatings stable to high temperature and UV on substrates, which comprises
(A) at least one element which is able to form a vitreous, crystalline or partially crystalline oxide, in the form of a compound which on heat treatment is able to yield said oxide and is present as a sol or solution in an at least predominantly aqueous medium, as the matrix-forming component; and
(B) at least one member from the group of metal colloids, metal compound colloids and metal alloy colloids and metal compounds which are able under reducing conditions to form metal colloids, as the coloring component.

15. The use of a coating composition as defined in any one of claims 1 to 11 for the manufacture of transparent, colored coatings stable to high temperature and UV on substrates, preferably glass substrates, which are exposed to high temperatures during their use, especially on lamp bulbs and gas discharge tubes.

## Revendications

1. Procédé pour préparer des substrats portant des revêtements transparents, colorés, résistants aux hautes température et aux rayonnements UV, **caractérisé par** le fait que l'on dépose sur un substrat une composition de revêtement contenant
(A) en tant que composant formant la matrice, au moins un élément capable de former un oxyde vitreux, cristallin ou partiellement cristallin, sous forme d'un composé qui, lorsqu'on le soumet à un traitement thermique, peut donner un tel oxyde, et qui est présent sous forme d'une solution ou d'un sol dans un milieu au moins majoritairement aqueux ;
(B) en tant que composant colorant, au moins un membre du groupe formé par les colloïdes métalliques, les colloïdes à base de composés métalliques ou d'alliages de métaux, et les composés métalliques capables de former, dans des conditions réductrices, des colloïdes métalliques,
et en ce que l'on soumet le revêtement ainsi formé à un durcissement thermique de manière à obtenir le substrat revêtu.

2. Procédé selon la revendication 1, **caractérisé par** le fait que l'élément entrant dans la composition du composant (A) est choisi parmi Si, B, Al, Pb, Ge, Bi, Sb, As, P, Ti, Zr, Hf, V, Mo, W, Nb, Ta, Al, Zn, Sn, Ce et n'importe quel mélange de ces éléments.

3. Procédé selon la revendication 1 ou 2, **caractérisé par** le fait que l'élément entrant dans la composition du composant (A) contient au moins un élément choisi parmi Si, Ti et Zr.

4. Procédé selon l'une quelconque des revendications 1 à 3, **caractérisé par** le fait que le composant (A) contient en plus au moins un composant d'un élément modifiant la matrice.

5. Procédé selon la revendication 4, **caractérisé par** le fait que l'élément modifiant la matrice est choisi parmi les métaux alcalins et alcalino-terreux.

6. Procédé selon l'une quelconque des revendications 1 à 5, **caractérisé par** le fait que le milieu au moins majoritairement aqueux du composant (A) contient au moins 70 % et en particulier au moins 90 % en volume d'eau.

7. Procédé selon l'une quelconque des revendications 1 à 5, **caractérisé par** le fait que le métal formant le composant (B) est choisi parmi Au, Ag, Cu, Pd, Pt, Ir, Rh, Ru et les mélanges de ces métaux.

8. Procédé selon l'une quelconque des revendications 1 à 7, **caractérisé par** le fait que les métaux du composant (B) sont présents en une concentration allant de 0,01 à 50 % en nombre d'atomes, rapporté à la somme des atomes du composant (A) et des atomes métalliques du composant (B).

9. Procédé selon l'une quelconque des revendications 1 à 8, **caractérisé par** le fait que les composés métalliques du composant (B) sont présents au moins partiellement sous forme de complexes.

10. Procédé selon la revendication 9, **caractérisé par** le fait que le rapport atomes métalliques/ligands est compris entre 1/0,1 et 1/500.

11. Procédé selon l'une des revendications 1 à 10, **caractérisé par** le fait que la composition de revêtement contient en outre au moins un élément choisi dans le groupe formé par les acides ou bases, les agents réducteurs capables de réduire les composés métalliques du composant (B), des liants organiques ou minéraux et les solvants organiques.

12. Procédé selon l'une quelconque des revendications 1 à 11, **caractérisé par** le fait que le substrat est un substrat en verre.

13. Procédé selon la revendication 12, **caractérisé par** le fait que le substrat en verre est choisi parmi les ampoules de lampes, les lampes à halogène, les tubes à décharge et les filtres additionnels.

14. Composition de revêtement pour la formation, sur des substrats, de revêtements transparents, colorés, résistants aux hautes températures et aux rayonnement UV, **caractérisée par** le fait qu'elle contient
(A) en tant que composant formant la matrice, au moins un élément capable de former un oxyde vitreux, cristallin ou partiellement cristallin, sous forme d'un composé qui, lorsqu'on le soumet à un traitement thermique, peut donner un tel oxyde, et qui est présent sous forme d'une solution ou d'un sol dans un milieu au moins majoritairement aqueux ;
(B) en tant que composant colorant, au moins un membre du groupe formé par les colloïdes métalliques, les colloïdes à base de composés métalliques ou d'alliages de métaux, et les composés métalliques capables de former, dans des conditions réductrices, des colloïdes métalliques.

15. Utilisation d'une composition de revêtement telle que définie dans une des revendications 1 à 11, pour former des revêtements transparents, colorés, résistants aux hautes températures et aux rayonnements UV, sur des substrats, de préférence des substrats en verre susceptibles d'être exposés lors de leur utilisation à des températures élevées, en particulier des ampoules de lampes et des tubes à décharge.
